# EUROPÄISCHE PATENTSCHRIFT

(11) **EP 1 745 976 B1**
(45) Veröffentlichungstag und Bekanntmachung des Hinweises auf die Patenterteilung: **27.08.2008**
(21) Anmeldenummer: 06008253.4
(22) Anmeldetag: 21.04.2006
(51) Int. Cl.: B60N 2/22, B60N 2/36, B60N 2/30, B60R 5/04

(54) **Kraftfahrzeug**
Vehicle
Véhicule

(30) Priorität: 19.07.2005 DE 102005033657
(43) Veröffentlichungstag der Anmeldung: 24.01.2007
(73) Patentinhaber: Dr. Ing. h.c. F. Porsche Aktiengesellschaft, 70435 Stuttgart (DE)
(72) Erfinder: Raub, Bernd, 75378 Bad Liebenzell (DE)

(56) Entgegenhaltungen:
- WO-A-00/13931
- DE-A1- 10 215 093
- DE-A1- 10 257 171
- JP-A- 58 073 446

## Beschreibung

Die Erfindung betrifft - gemäß Oberbegriff des Patentanspruchs 1- ein Kraftfahrzeug mit mindestens einem Vordersitz, der eine Vordersitzfläche und eine Vordersitzrückenlehne aufweist, und mit mindestens einem Rücksitz, der eine Rücksitzfläche aufweist, wobei die Vordersitzrückenlehne mehrteilig ausgebildet ist und ein Lehnenteil umfasst, das aus einer Lehnenteilsitzstellung, in der das Lehnenteil zusammen mit dem Rest der Vordersitzrückenlehne eine Rückenanlagefläche bildet, in eine Lehnenteilliegestellung bewegbar ist, in der ein Lehnendurchgangsloch in der Vordersitzrückenlehne freigegeben ist, wie es aus der JP-A-58073446 bekannt ist.

Aus dem amerikanischen Patent US 1,832,767 ist ein Kraftfahrzeug mit einem Vordersitz bekannt, der eine Vordersitzrückenlehne aufweist, die aus einer Vordersitzlehnenstellung in eine Vordersitzliegestellung schwenkbar ist, in der die Vordersitzrückenlehne auf der Vordersitzfläche aufliegt.

Die DE 102 57 171 A1 beschreibt ein Kraftfahrzeug mit einem Rücksitz, der eine Rücksitzfläche und eine Rücksitzrückenlehne aufweist. Ein hinter dem Rücksitz angeordneter Laderaumboden liegt etwa auf dem Niveau der Rücksitzfläche.

Aufgabe der Erfindung ist es, den Komfort in einem Kraftfahrzeug der eingangs genannten Art zu verbessern.

Die Aufgabe wird gelöst mit einem Kraftfahrzeug mit mindestens einem Vordersitz, der eine Vordersitzfläche und eine Vordersitzrückenlehne aufweist, und mit mindestens einem Rücksitz, der eine Rücksitzfläche aufweist, wobei die Vordersitzrückenlehne mehrteilig ausgebildet ist und ein Lehnenteil umfasst, das aus einer Lehnenteilsitzstellung, in der das Lehnenteil zusammen mit dem Rest der Vordersitzrückenlehne eine Rückenanlagefläche bildet, in eine Lehnenteilliegestellung bewegbar ist, in der ein Lehnendurchgangsloch in der Vordersitzrückenlehne freigegeben ist, und wobei erfindungsgemäß vorgesehen ist, dass der Rücksitz eine aus einer Rücksitzlehnenstellung in eins erste Rücksitzliegestellung nach hinten schwenkbare Rücksitzrückenlehne aufweist, die in ihrer ersten Liegestellung in einer Ebene mit der Rücksitzfläche, dem in seiner Liegestellung angeordneten Lehnenteil und der Vordersitzfläche angeordnet ist. Dadurch kann die gesamte Vorder- und Rücksitzanlage des Kraftfahrzeugs zu einer Liegefläche für zwei Personen umgestaltet werden. Außerdem wird auf der Beifahrerseite eine Durchlademöglichkeit vom Heck des Kraftfahrzeugs bis in den Beifahrerfußraum geschaffen. Die Begriffe vorne/hinten und vorder/rück beziehen sich auf die Fahrzeuglängsrichtung. Das Kraftfahrzeug kann auch mehrere Sitzreihen umfassen. Dann wird der jeweils vordere Sitz eines Sitzpaares in Fahrzeuglängsrichtung als Vordersitz und der jeweils hintere Sitz als Rücksitz bezeichnet. Das Lehnendurchgangsloch ermöglicht zum einen die Schaffung einer durchgehenden Liegefläche. Zum anderen wird durch das Lehnendurchgangsloch eine Durchlademöglichkeit geschaffen.

Ein bevorzugtes Ausführungsbeispiel des Kraftfahrzeugs ist dadurch gekennzeichnet, dass das Lehnenteil in seiner Liegestellung im Wesentlichen horizontal zwischen der Vordersitzfläche und der Rücksitzfläche angeordnet ist. Dadurch wird der Zwischenraum zwischen der Vordersitzfläche und der Rücksitzfläche auf einfache Art und Weise überbrückt.

Ein weiteres bevorzugtes Ausführungsbeispiel des Kraftfahrzeugs ist dadurch gekennzeichnet, dass das Lehnenteil schwenkbar an dem Vordersitz angebracht ist. Vorzugsweise ist die Schwenklagerung für das Lehnenteil mit einer Rasteinrichtung ausgestattet, die ein Verrasten des Lehnenteils in seinen verschiedenen Stellungen ermöglicht.

Ein weiteres bevorzugtes Ausführungsbeispiel des Kraftfahrzeugs ist dadurch gekennzeichnet, dass das Lehnenteil eine gemeinsame Schwenkachse mit der Vordersitzrückenlehne aufweist. Dadurch wird der Sitzaufbau des Kraftfahrzeugs vereinfacht.

Ein weiteres bevorzugtes Ausführungsbeispiel des Kraftfahrzeugs ist dadurch gekennzeichnet, dass die Rücksitzrückenlehne aus ihrer Rücksitzlehnenstellung in eine zweite Rücksitzliegestellung nach vorne schwenkbar ist. Die nach vorne geschwenkte Rücksitzrückenlehne bildet einen Teil einer Ladefläche.

Ein weiteres bevorzugtes Ausführungsbeispiel des Kraftfahrzeugs ist dadurch gekennzeichnet, dass die Rücksitzfläche aus einer Sitzstellung in eine abgesenkte Ladestellung bewegbar ist. Dadurch wird Platz für die nach vorne geschwenkte Rücksitzrückenlehne geschaffen, so dass diese in ihrer zweiten Rücksitzliegestellung in eine Ebene mit der Vordersitzfläche oder der Oberseite der nach vorne umgeklappten Vordersitzrückenlehne gebracht werden kann.

Ein weiteres bevorzugtes Ausführungsbeispiel des Kraftfahrzeugs ist dadurch gekennzeichnet, dass die Rücksitzrückenlehne in ihrer zweiten Rücksitzliegestellung in einer Ebene mit dem in seiner Liegestellung angeordneten Lehnenteil und der Vordersitzfläche angeordnet ist. Dadurch wird eine durchgehende Ladefläche geschaffen.

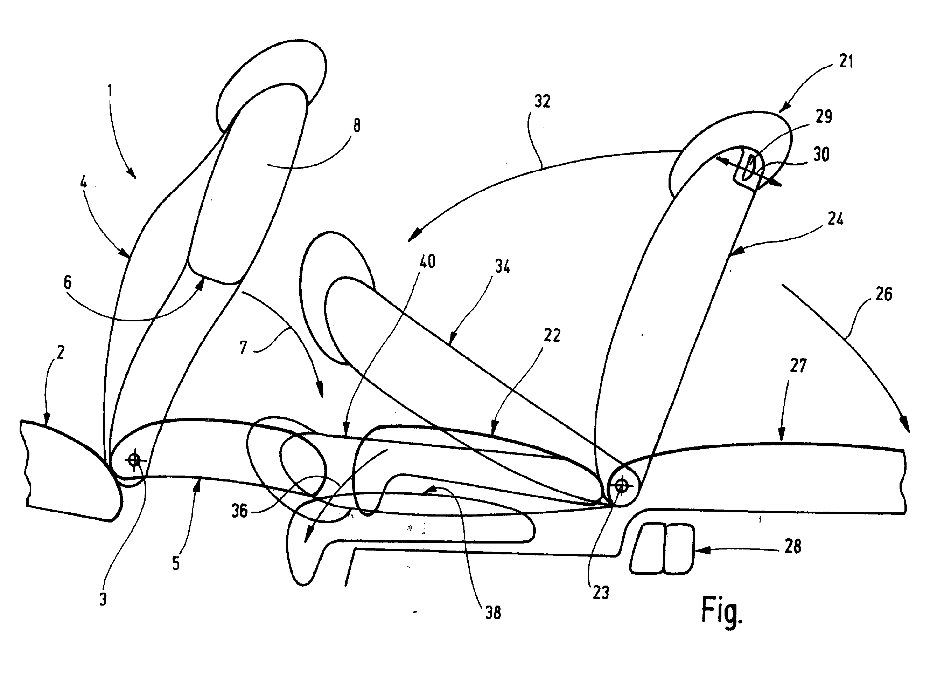

Weitere Merkmale, Vorteile und Einzelheiten der Erfindung ergeben sich aus der nachfolgenden Beschreibung, in der unter Bezugnahme auf die Zeichnung ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.

Die beiliegende Figur zeigt eine schematische Darstellung des Innenraums eines Kraftfahrzeugs in einer Seitenansicht von links.

Die einzige Figur zeigt einen Vordersitz 1 in der Seitenansicht. Der Vordersitz 1 umfasst eine Vordersitzfläche 2 und eine um eine Schwenkachse 3 schwenkbare Vordersitzrückenlehne 4. Die Vordersitzrückenlehne 4 ist nicht einteilig, sondern mehrteilig ausgebildet, und umfasst neben einer (nicht näher bezeichneten) Kopfstütze ein Lehnenteil 5, das um die Schwenkachse 3 zwischen einer Lehnenteilsitzstellung und einer Lehnenteilliegestellung schwenkbar ist.

In der Figur ist das Lehnenteil 5 in seiner Lehnenteilliegestellung angeordnet, so dass ein Durchgangsloch 6 in der Vordersitzrückenlehne 4 freigegeben ist. Das Durchgangsloch 6 wird durch das Lehnenteil 5 geschlossen, wenn das Lehnenteil 5 aus der dargestellten Lehnenteilliegestellung in seine Lehnenteilsitzstellung verschwenkt wird. Durch einen Pfeil 7 ist die Bewegung des oberen Endes des Lehnenteils 5 bei einem Verschwenken aus der Lehnenteilsitzstellung in die Lehnenteilliegestellung angedeutet. Der Rest der Vordersitzrückenlehne 4 ohne das Lehnenteil 5 ist in der Figur mit 8 bezeichnet.

In Fahrzeuglängsrichtung hinter dem Vordersitz 1 ist ein Rücksitz 21 angeordnet. Der Rücksitz 21 umfasst eine Rücksitzfläche 22 und eine um eine Schwenkachse 23 schwenkbare Rücksitzrückenlehne 24. Durch einen Pfeil 26 ist angedeutet, dass die Rücksitzrückenlehne 24 aus ihrer Rücksitzlehnenstellung in eine erste Rücksitzliegestellung 27 schwenkbar ist. Unterhalb der in ihrer ersten Rücksitzliegestellung 27 angeordneten Rückensitzrückenlehne verläuft ein Luftkanal 28 einer Klimaanlage. Am oberen Ende der Rücksitzrückenlehne 24 ist ein Betätigungshebel 29 angebracht, der, wie durch einen Doppelpfeil 30 angedeutet ist, in verschiedene Richtungen bewegbar ist, um die Rücksitzrückenlehne 24 entweder in Richtung des Pfeils 26 oder in Richtung eines Pfeils 32 zu schwenken.

Bei einem Verschwenken der Rücksitzrückenlehne 24 in Richtung des Pfeils 32 gelangt die Rücksitzrückenlehne 24 zunächst in eine Zwischenstellung 34. Ein weiteres Verschwenken der Rücksitzrückenlehne 24 wird durch die Rücksitzfläche 22 behindert. Durch einen Pfeil 36 ist angedeutet, dass die Rücksitzfläche 22 aus ihrer Sitzstellung in eine abgesenkte Ladestellung 38 bewegbar ist. Wenn sich die Rücksitzfläche 22 in ihrer abgesenkten Ladestellung 38 befindet, dann kann die Rücksitzrückenlehne 24 aus ihrer Zwischenstellung 34 in eine zweite Rücksitzliegestellung 40 verschwenkt werden.

Durch die erfindungsgemäße Gestaltung des Kraftfahrzeugs lässt sich die gesamte Vorder- und Rücksitzanlage als Liegefläche für zwei Personen umgestalten beziehungsweise auf der Beifahrerseite zum Transport von langen Gegenständen verwenden. Solche langen Gegenstände können von einer Heckklappe des Kraftfahrzeugs bis in den Beifahrerfußraum reichen.

Bei dem Lehnenteil 5 handelt es sich vorzugsweise um ein Mittelstück der Vordersitzrückenlehne 4, das als Beinauflage für den Rücksitzbereich nach hinten herausklappbar ist. Daneben schafft das von dem herausgeklappten Lehnenteil 5 freigegebene Durchgangsloch 6 eine Durchlademöglichkeit.

Wenn die Rücksitzrückenlehne 24 in Richtung des Pfeils 32 nach vorne geschwenkt wird, dann wird die Rücksitzfläche 22 zwangsgesteuert nach vorne gefahren und dabei gleichzeitig abgesenkt. In ihrer abgesenkten Ladestellung 38 ermöglicht die Rücksitzfläche 22 einen flachen Übergang zum herausgeklappten Lehnenteil 5 und der Vordersitzfläche 2.

Durch eine Betätigung des Betätigungshebels 29, der leicht zugänglich ist, kann die Rücksitzrückenlehne 24 auch nach hinten geklappt werden, wie durch den Pfeil 26 angedeutet ist. Die Vordersitzfläche 2, das herausgeklappte Lehnenteil 5, die Rücksitzfläche 22 und die in ihrer ersten Rücksitzliegestellung 27 befindliche Rücksitzrückenlehne 24 schaffen eine durchgehende Liegefläche von circa 2 m Länge. Die Vordersitzfläche 2 hat eine Länge von etwa 50 cm. Das herausgeklappte Lehnenteil 5 hat eine Länge von etwa 30 cm. Die Rücksitzfläche 22 hat eine Länge von etwa 50 cm. Die in ihrer ersten Rücksitzliegestellung befindliche Rücksitzrückenlehne 24 hat eine Länge von etwa 70 cm.

## Patentansprüche

1. Kraftfahrzeug mit mindestens einem Vordersitz (1), der eine Vordersitzfläche (2) und eine Vordersitzrückenlehne (4) aufweist, und mit mindestens einem Rücksitz (21), der eine Rücksitzfläche (22) aufweist, wobei die Vordersitzrückenlehne (4) mehrteilig ausgebildet ist und ein Lehnenteil (5) umfasst, das aus einer Lehnenteilsitzstellung, in der das Lehnenteil (5) zusammen mit dem Rest (8) der Vordersitzrückenlehne (4) eine Rückenanlagefläche bildet, in eine Lehnenteilliegestellung bewegbar ist, in der ein Lehnendurchgangsloch (6) in der Vordersitzrückenlehne (4) freigegeben ist, **dadurch gekennzeichnet, dass** der Rücksitz (21) eine aus einer Rücksitzlehnenstellung in eine erste Rücksitzliegestellung (27) nach hinten schwenkbare Rücksitzrückenlehne (24) aufweist, die in ihrer ersten Liegestellung (27) in einer Ebene mit der Rücksitzfläche (22), dem in seiner Liegestellung angeordneten Lehnenteil (5) und der Vordersitzfläche (2) angeordnet ist.

2. Kraftfahrzeug nach Anspruch 1, **dadurch gekennzeichnet, dass** das Lehnenteil (5) in seiner Liegestellung im Wesentlichen horizontal zwischen der Vordersitzfläche (2) und der Rücksitzfläche (22) angeordnet ist.

3. Kraftfahrzeug nach einem der vorhergehenden Ansprüche, **dadurch gekennzeichnet, dass** das Lehnenteil (5) schwenkbar an dem Vordersitz (1) angebracht ist.

4. Kraftfahrzeug nach Anspruch 3, **dadurch gekennzeichnet, dass** das Lehnenteil (5) eine gemeinsame Schwenkachse (3) mit der Vordersitzrückenlehne (4) aufweist.

5. Kraftfahrzeug nach Anspruch 1, **dadurch gekennzeichnet, dass** die Rücksitzrückenlehne (24) aus ihrer Rücksitzlehnenstellung in eine zweite Rücksitzliegestellung (40) nach vorne schwenkbar ist.

6. Kraftfahrzeug nach Anspruch 5, **dadurch gekennzeichnet, dass** die Rücksitzfläche (22) aus einer Sitzstellung in eine abgesenkte Ladestellung (38) bewegbar ist.

7. Kraftfahrzeug nach Anspruch 6, **dadurch gekennzeichnet, dass** die Rücksitzrückenlehne (24) in ihrer zweiten Rücksitzliegestellung (40) in einer Ebene mit dem in seiner Liegestellung angeordneten Lehnenteil (5) und der Vordersitzfläche (2) angeordnet ist.

## Claims

1. Vehicle with at least one front seat (1) which has a front-seat surface (2) and a front-seat back rest (4), and with at least one rear seat (21) which has a rear-seat surface (22), wherein the front-seat back rest (4) is of multi-part design and comprises a back-support part (5) which can be moved from a back-support-part sitting position, in which the back-support part (5) together with the rest (8) of the front-seat back rest (4) forms a bearing surface for the back, into a back-support-part reclining position in which a back-support part through hole (6) in the front-seat back rest (4) is opened up, **characterized in that** the rear seat (21) has a rear-seat back rest (24) which can be pivoted to the rear from a rear-seat back-supporting position into a first rear-seat reclining position (27) and, in its first reclining position (27), is arranged in a plane with the rear-seat surface (22), the back-support part (5) arranged in its reclining position and the front-seat surface (2).

2. Vehicle according to Claim 1, **characterized in that** the back-support part (5) in its reclining position is arranged substantially horizontally between the front-seat surface (2) and the rear-seat surface (22).

3. Vehicle according to one of the preceding claims, **characterized in that** the back-support part (5) is attached pivotably to the front seat (1).

4. Vehicle according to Claim 3, **characterized in that** the back-support part (5) has a common pivot axis (3) with the front-seat back rest (4).

5. Vehicle according to Claim 1, **characterized in that** the rear-seat back rest (24) can be pivoted forwards from its rear-seat back-supporting position into a second rear-seat reclining position (40).

6. Vehicle according to Claim 5, **characterized in that** the rear-seat surface (22) can be moved from a sitting position into a lowered loading position (38).

7. Vehicle according to Claim 6, **characterized in that** the rear-seat back rest (24) in its second rear-seat reclining position (40) is arranged in a plane with the back-support part (5), which is arranged in its reclining position, and the front-seat surface (2).

## Revendications

1. Véhicule automobile comprenant au moins un siège avant (1), qui présente une surface de siège avant (2) et un dossier de siège avant (4), et comprenant au moins un siège arrière (21) qui présente une surface de siège arrière (22), le dossier du siège avant (4) étant réalisé en plusieurs parties et comprenant une partie de dossier (5) qui peut être déplacée d'une position de siège de la partie de dossier, dans laquelle la partie de dossier (5) forme conjointement avec le reste (8) du dossier de siège avant (4) une surface d'appui pour le dos, dans une position couchée de la partie de dossier, dans laquelle un orifice de passage du dossier (6) est libéré dans le dossier de siège avant (4), **caractérisé en ce que** le siège arrière (21) présente un dossier de siège arrière (24) pouvant pivoter vers l'arrière d'une position de dossier de siège arrière dans une première position couchée de siège arrière (27), qui, dans sa première position couchée (27) est disposé dans un plan commun avec la surface de siège arrière (22), la partie de dossier (5) disposée dans sa position couchée, et la surface de siège avant (2).

2. Véhicule automobile selon la revendication 1, **caractérisé en ce que** la partie de dossier (5) est disposée, dans sa position couchée, essentiellement horizontalement entre la surface de siège avant (2) et la surface de siège arrière (22).

3. Véhicule automobile selon l'une quelconque des revendications précédentes, **caractérisé en ce que** la partie de dossier (5) est montée de manière pivotante sur le siège avant (1).

4. Véhicule automobile selon la revendication 3, **caractérisé en ce que** la partie de dossier (5) présente un axe de pivotement (3) commun avec le dossier de siège avant (4).

5. Véhicule automobile selon la revendication 1, **caractérisé en ce que** le dossier de siège arrière (24) peut pivoter vers l'avant de sa position de dossier de siège arrière dans une deuxième position couchée de siège arrière (40).

6. Véhicule automobile selon la revendication 5, **caractérisé en ce que** la surface de siège arrière (22) peut être déplacée d'une position de siège dans une position de chargement abaissée (38).

7. Véhicule automobile selon la revendication 6, **caractérisé en ce que** le dossier de siège arrière (24) est disposé dans sa deuxième position couchée de siège arrière (40) dans un plan commun avec la partie de dossier (5) disposée dans sa position couchée et la surface de siège avant (2).
